# EUROPEAN PATENT APPLICATION

(11) **EP 3 067 440 A1**
(43) Date of publication of application: **14.09.2016**
(21) Application number: 16159300.9
(22) Date of filing: 09.03.2016
(51) Int. Cl.: C25B 1/04, C01B 3/02, B01D 15/10, G01N 30/26

(54) **GAS GENERATOR FOR GAS CHROMATOGRAPHS**

(30) Priority: 09.03.2015 IT MI20150351
(71) Applicant: D.B.S. Strumenti Scientifici S.p.A., 35010 Vigonza (PD) (IT)
(72) Inventor: BERIOTTO, Nicolò, 35010 Vigonza PD (IT); BERIOTTO, Umberto, 35010 Vigonza PD (IT)
(74) Representative: Marietti, Andrea

(57) **Abstract**

Gas generator for gas chromatograph comprising means for producing hydrogen, and possibly means for generating pure air, and an outer casing for enclosing at least these means for producing hydrogen, and possibly said means for generating pure air. The outer casing comprises a bearing surface arranged substantially horizontal in an operative condition and shaped so as to stably bear a gas chromatograph.

## Description

The present invention concerns a gas generator for gas chromatographs, of the type comprising at least means for producing hydrogen and, optionally, means for generating a flow of pure or purified air.

As known, a gas chromatograph makes it possible to analyze the composition of a gaseous phase, possibly obtained by vaporizing, even in a rapid way ("*flash combustion*"), a solid or liquid sample of such substance. In brief, the components of the gaseous phase, which is for example automatically introduced (preferably via a so-called "*autosampler*") into the gas chromatograph, are usually injected into a capillary column which is provided with a so-called stationary phase, for example in form of a film coating the inside of the capillary column itself, and which is able to interact in many ways (e.g. by differentiated adsorption) with the various components of the gaseous sample and can be subjected to a given thermal regime, so as to cause the gaseous substance to be fractionate at the output of the capillary column itself. In particular, the substance to be analyzed is carried within the capillary column by a carrier gas, typically inert gases, such as helium, nitrogen or preferably, thanks to lower allowed elution temperatures, hydrogen.

It should be noted that these gas chromatographs usually have a considerable weight, generally in the order of tens of kilograms, for example even up to 40-60 kg.

Additionally, the fractionated components at the output of the capillary column can be analyzed by using, among the various known techniques, a FID detector (*"flame ionisation detector*"), which uses a hydrogen flame with purified air as comburent.

Therefore, in order to allow these types of gas chromatograph to operate, hydrogen, as well as sometimes purified air, turns out to be an important component.

According to a first solution known in the art, a manually-operated hydrogen cylinder can be connected to the gas chromatograph. However, since the hydrogen cylinders are bulky and require special safety measures during use and transport, this solution proves to be inconvenient.

Alternatively, it is known in the art to connect a gas generator for gas chromatographs of the type comprising means for producing hydrogen, usually combined with means for generating a flow of pure air, which is arranged next to the gas chromatograph. In order to obtain hydrogen from water and to supply it to the gas chromatograph, known means for producing hydrogen typically exploit the principle of electrolysis, for example in an electrolytic cell with proton exchange membrane, or "polymeric membrane" (PEM), whereas the pure air generation means, as well as filters and fans, may use a high-temperature catalyst and then a coil for cooling the purified flow. Although this solution is safer and handier than the cylinder, as well as more effective thanks to the possibility of integrating the means for generating pure air, it does not completely solve the problem of the component dimension.

In fact, even if the generators of hydrogen gas and, optionally, of pure air for gas chromatographs of the prior art have small size, they are provided with a vertically extending casing, or cabinet, inside which a water reservoir and means for producing hydrogen, such as precisely an electrolytic cell with a polymer membrane, are contained optionally in addition to means for generating pure air, which must be connected to the gas chromatograph through at least one suitable duct having a not excessive length in order to prevent thermal or fluid-dynamic alterations. And therefore, the hydrogen gas generators currently available on the market, possibly generating a flow of pure air, must be arranged next to the corresponding gas chromatograph, thereby requiring a bearing plane considerably extended in the horizontal direction to be provided.

It is therefore an object of the present invention to implement a gas generator for gas chromatographs of the type comprising at least means for producing hydrogen, which is easy to be manufactured and allows a connection with a gas chromatograph able to minimize the space used by the two components.

The present invention achieves this and other objects by means of a gas generator for gas chromatograph according to claim 1. Preferred aspects of the present invention are set forth in the dependent claims.

According to an aspect of the present invention, a gas generator for gas chromatograph comprises means for producing hydrogen and an outer casing for enclosing at least the means for producing hydrogen. The outer casing comprises a bearing surface arranged substantially horizontal in an operative condition and shaped so as to -stably- bear a gas chromatograph rested thereon.

Herein, the definition "shaped to bear a gas chromatograph" means that the bearing surface is sized and structured, or mounted on its casing or even supported by supporting means such as centerings or bracing beams, so that it is able to stably and safely hold up a gas chromatograph rested thereon without breaking, or however without deforming, thereby jeopardizing the operation of the means for producing hydrogen housed within the above said casing.

In particular, the gas generator bearing surface for the gas chromatograph claimed herein is shaped so that the gas chromatograph, usually having a weight equal to one or more tens of kilograms, can be stably rested and retained by its side intended to rest on this bearing surface, for example by selecting suitable materials, thicknesses, geometric shapes (e.g. ribs) or by providing supports within the housing.

Thanks to the present invention the gas generator system, comprising at least means for producing hydrogen, and the respective gas chromatograph are vertically stacked, thereby reducing the horizontal bulk of these devices on a working surface.

Moreover, the gas generator provided with at least means for producing hydrogen, is placed in contact with the gas chromatograph and, therefore, a reduction of the tubing length required to connect the first to the second is obtained, thereby bringing benefits to the stability of the thermodynamic and fluid-dynamic conditions under which the hydrogen is supplied to the gas chromatograph itself.

According to a preferred aspect of the present invention, the outer casing comprises at least one supporting element for the bearing surface, constrained to the surface itself and arranged at least partially inside the casing.

These supporting elements allow to increase the strength of the bearing surface, which is intended to hold up the gas chromatograph weight, which can exceed 60 kg and that, in any case, is of the order of one or more tens of kilograms.

According to an aspect of the present invention, the supporting element extends from said bearing surface to a second surface, for example a lower or bearing one, of said casing.

According to another aspect of the present invention, the height of the outer casing is smaller than the other two dimensions.

Thanks to this aspect the hydrogen generator is more compact.

According to a further aspect of the present invention, the outer casing is provided with at least one first and one second housing. The first housing encloses the means for producing hydrogen and is movable with respect to the above mentioned bearing surface of a gas chromatograph.

This solution allows to partition the casing into separate spaces, for example and preferably four separate spaces, which can be used to simultaneously accommodate different devices. As mentioned, the first housing encloses means for producing hydrogen and optionally, but preferably, means for generating a flow of purified air.

For example, the second housing can be used to accommodate means for supplying water to the first housing, and it can be mechanically separated from the first one, further possibly in such a way as to ensure that the two housings are fluidically-sealed from each other.

Because the first housing is movable, this also facilitates the assembling of the component and allows to easily inspect, maintain or replace the aforesaid means for producing hydrogen and, optionally, the means for generating a flow of pure air. According to a particular aspect of the present invention, the first housing can be translated with respect to the bearing surface along a direction substantially parallel to the bearing surface.

In a particular embodiment of the invention, the second housing is arranged to the first housing laterally. Thanks to that, the movement of the first housing is facilitated and the space inside the casing is effectively used.

In another embodiment of the invention, the bearing surface can be stably constrained to the second housing. Thanks to that, the movement of the first housing is not hindered by the bearing surface for the gas chromatograph.

According to another aspect of the present invention, the second housing may comprise supporting elements. Typically, the supporting elements can form a side wall of the second housing. In this way, the second housing is not deformed by the weight of the gas chromatograph rested on the bearing surface.

Hereinafter, referring to the appended figures, an exemplary and non-limiting implementation of the present invention will be described, wherein:

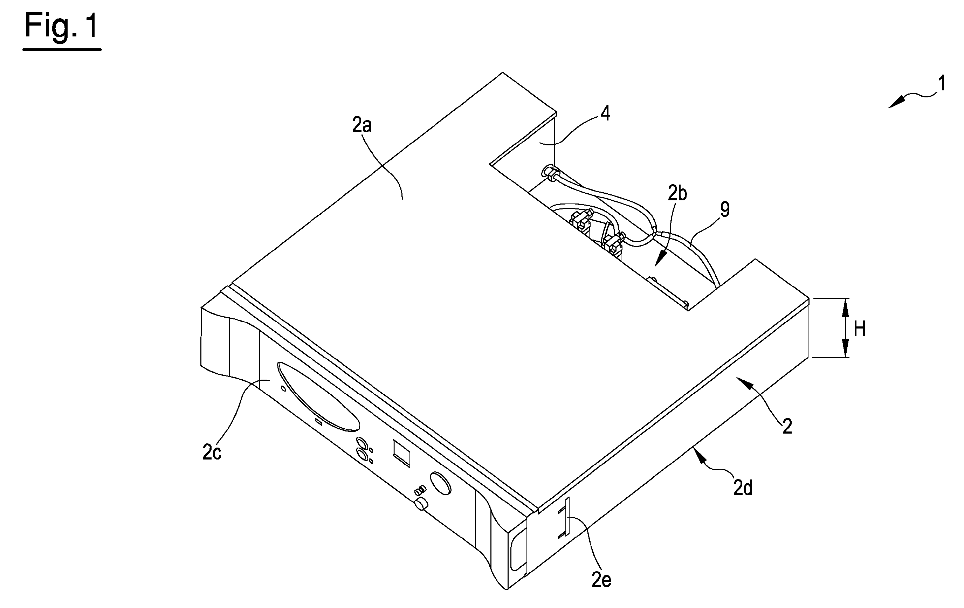

- figure 1 is a perspective view of a gas generator provided with means for producing hydrogen and means for generating pure air, according to a particular embodiment of the present invention;
- figure 2 is a perspective view of the generator of figure 1, in which the first housing is translated with respect to the second housing;
- figure 3 is a perspective view of the generator of figure 1, in which the bearing surface is omitted in order to show the inner components of the generator;
- figure 4 is a perspective view of the generator of figure 1, arranged on a working surface and coupled to a gas chromatograph.

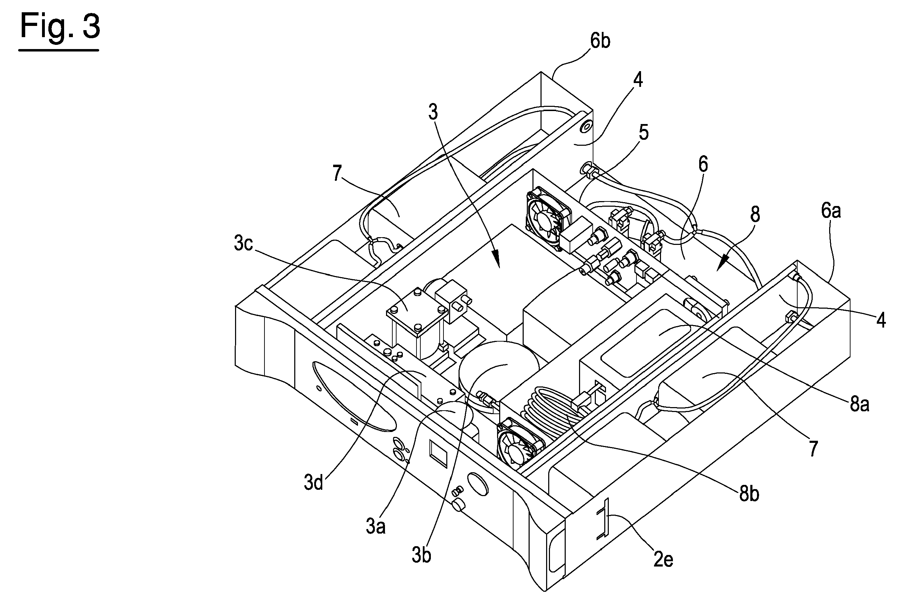

Referring to figures, a gas generator for gas chromatographs 1 of the type able to deliver to a gas chromatograph at least one hydrogen flow, and possibly a flow of purified air, according to one aspect of the present invention, comprises an outer casing 2 to enclose at least means 3 for producing hydrogen. These means for producing hydrogen, such as for example an electrolytic cell provided with a proton exchange membrane ("polymeric membrane" - PEM), are known in the art and thus are not described in detail. Among others, Figure 3 shows a water container 3a, an electrolytic cell 3b provided with a polymeric membrane, for producing hydrogen from water, a liquid-gas separator 3c and a dryer 3d.

It should be noted that similar components for producing pure hydrogen may be alternatively used within the generator 1, without departing from the inventive idea of the present invention.

Typically, the casing 2 has a height H smaller than the other two dimensions of the casing.

In the embodiment shown herein, the casing 2 has a substantially parallelepiped shape. A side surface of the parallelepiped is provided with a recess 2b (below referred to even as part of a second housing 6), for accommodating a tubing 9 such as, for example, the hydrogen delivering ducts to be connected to a gas chromatograph. Therefore, the projection of the tubing 9 on the base 2d of the parallelepiped forming the casing 2, is within the base 2d itself.

On a further side surface, typically the one opposite to the recess 2b, there is a control panel 2c allowing, in a known way, to control the operations of the generator 1, i.e. of the respective means 3 for producing hydrogen, and to display information about the state of the generator 1 itself.

The outer casing 2 comprises a bearing surface 2a shaped so as to bear on its top a gas chromatograph 10.

Therefore, in an operative condition, the bearing surface 2a is in horizontal position and arranged at the top portion of the casing 2.

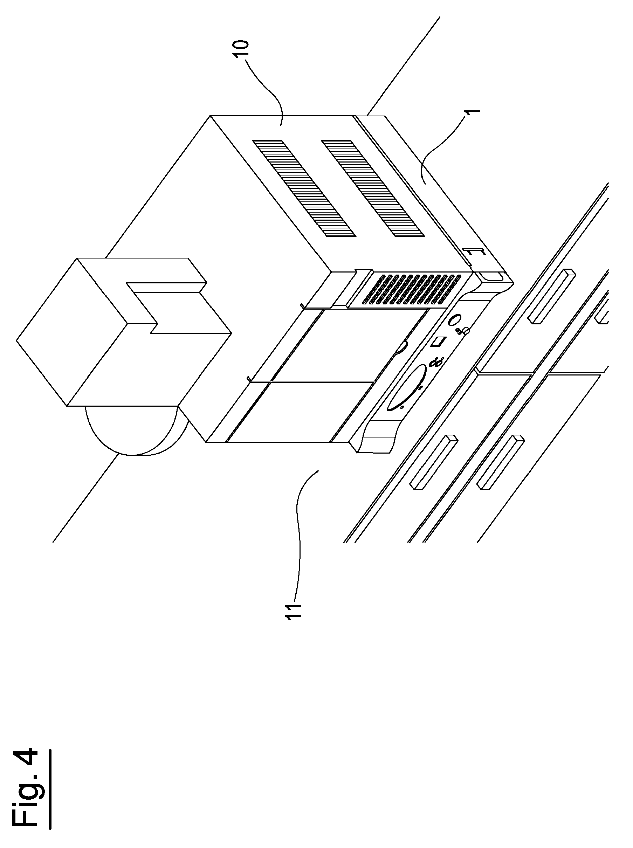

"Top portion" means herein the highest portion of the casing 2 with respect to the other casing portions, in an operative condition. In other words, the bearing surface 2a is shaped and positioned so that a gas chromatograph 10 can be arranged above the generator 1 (being in particular rested thereon), as shown in figure 4.

In the embodiment of the invention shown herein, the bearing surface 2a is substantially placed on a foil, which can be removably constrained at the top portion of the casing 2, as a lid.

Clearly, the size and shape of the bearing surface 2a are such as to support a gas chromatograph.

Therefore the casing 2, or at least the respective bearing surface 2a, is preferably made of metal, for example steel. In particular, the bearing surface 2a preferably can be made of Fe360 steel. The thickness of the bearing surface is preferably greater than 1.5 mm in order to withstand the weight of the gas chromatograph 10.

It should be noted that the horizontal bearing surface 2a, as mentioned intended to come into contact with a gas chromatograph 10, can be shaped so as to stably accommodate the gas chromatograph 10 itself, for example by means of perimeter frames or traces for housing any possible protrusion the gas chromatograph 10 can be provided with.

In order to improve the deformation resistance of the bearing surface 2a, the casing 2 can be provided with one or more supporting elements 4, better described below.

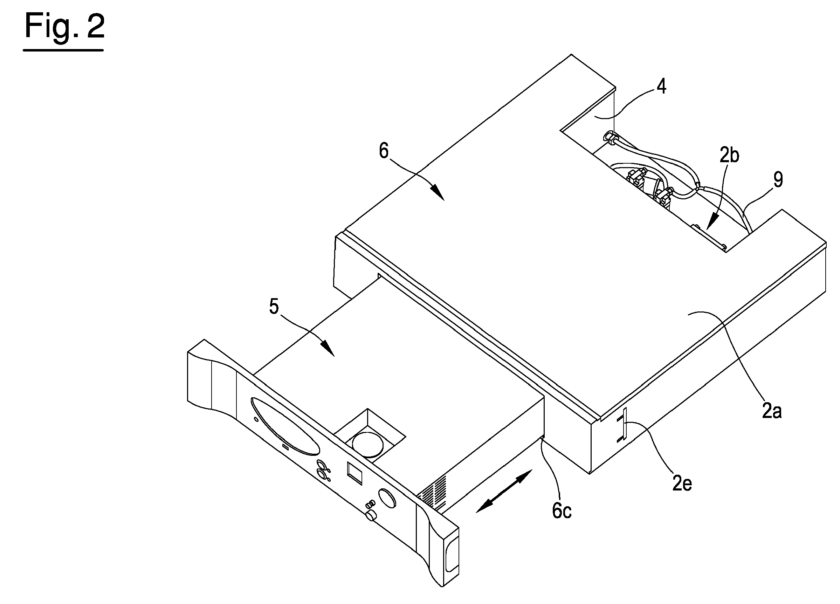

As shown in figures 2 and 3, the casing 2 can comprise at least one first housing 5 and at least one second housing 6.

The first housing 5 accommodates at least means 3 for producing hydrogen and is movable with respect to the second housing 6 and also, preferably, with respect to the bearing surface 2a and at least a pair of said walls of the casing 2. In the embodiment shown herein, the first housing 5 has a parallelepiped shape. Preferably, the base has a substantially square shape. The height is smaller than the base dimensions.

With this configuration, the space inside the first housing 5 can be effectively used, thereby allowing to insert additional elements or devices inside it. In fact, in the embodiment of the invention shown herein, the first housing 5 comprises not only means 3 for producing hydrogen but also means 8 for generating a flow of purified air. These means 8 are known in the art and are not discussed here in detail. In figure 3, among others, an exhaust fan, a high temperature-heated catalyst 8a can be seen and allow to eliminate impurities from the air, and a coil 8b to cool the air itself.

Since within the casing 2 of the gas generator 1 there are simultaneously both the means 3 for producing hydrogen and the means 8 for generating a flow of purified air, then the use of the generator 1 according to the present invention together with a corresponding gas chromatograph 10 results to be extremely practical.

It should be noted that the movability of the first housing 5 with respect to the second housing 6 and with respect to a self-supporting portion of the casing 2, for example constituted by two side walls 2d and the upper bearing surface 2a, allows such a first housing 5 to be moved like a drawer, so that the possible maintenance, repair or replacement of devices located inside it is facilitated.

The second housing 6 is preferably C-shaped and has two side portions 6a, 6b (i.e. the "wings" of the "C") which are arranged at the sides of the first housing 5, linked by the above said recess 2b in which the tubing of the generator 1 is placed, and which are separated by side walls to form two substantially box-shaped bodies covered by the bearing surface 2a.

It should be observed that the dimensions of the bearing surface 2a, suitably designed to allow a gas chromatograph 10 to be stably borne, result in the second housing 6, and in particular the box-shaped wings 6a, 6b thereof, having such a size as to be able to accommodate means or auxiliary devices of the gas generator 1 itself.

Preferably, the second housing 6 is used to accommodate the additional means 7 helping the operation of a gas chromatograph 10 and/or the operation of the means 3 for producing hydrogen. In the embodiment illustrated herein, the side box-shaped portions 6a, 6b of the second housing 6 each have a recess adapted to accommodate the means 7 comprising for example respective reservoirs, for the automatic filling of the water container 3a.

Therefore, the means 7 act as reserve of water (usually purified) and are connected to a sensor that measures the water inside the container 3a, so as to fill the latter when the level of water inside the container 3a is lower than a predetermined threshold. The water level within the means 7 can be instead inspected by means of an indicator 2e placed on a side surface of the casing 2. Typically, the indicator 2e is a window displaying to an operator the water level within the means 7.

It should be noted that alternative indicators may alternatively be used, also of the automatic type provided with level sensors.

In this case, however, the size of the second housing 6, obtained by virtue of the dimensions of the bearing surface 2a that cause the generator 1 of the present invention to be extended horizontally, although ergonomically, in order to bear a gas chromatograph 10, makes it possible to house distilled water reservoirs for the operation of the means 3 for producing hydrogen that are oversized with respect to those normally used in common vertically-extended hydrogen generators.

For example, such reservoirs of the means 7 for the automatic filling, thanks to the size of the second housing 6 and in particular of the respective box-shaped side portions 6a, 6b, may have a capacity comprised between 7 to 8 liters.

As mentioned, the first housing 5 is preferably movable with respect to the bearing surface 2a.

In the embodiment of the invention illustrated herein, the second C-shaped housing 6 is so provided with a recess 6c, allowing the first housing 5 to be slidingly inserted therein.

In particular, the recess 6c is substantially complementary shaped with respect to the section of the second housing 5. Therefore, the recess 6c has a width substantially equal to the distance between the two side portions 6a, 6b of the second housing 6.

The first housing can thus be translated with respect to the bearing surface 2a along a direction D parallel to the surface 2a itself. In other words, in use, the second housing can be horizontally moved with respect to the surface 2a, as a drawer.

According to an aspect of the present invention, the casing 2 can be preferably provided with supporting elements 4 for the bearing surface 2a. The supporting elements 4 at least partially extend inside the casing 2. In other words, the supporting elements 4 are constrained to the bearing surface 2a at a non-peripheral portion of the bearing surface 2a itself.

The supporting elements 4, in the form of vertically extending plates or centerings, are typically arranged between the bearing surface 2a and a second surface, preferably lower, of the casing 2. Preferably, the supporting elements 4 are interposed between the bearing surface 2a and the base 2d of the casing 2 opposite with respect to the bearing surface 2a.

In the embodiment shown herein, the supporting elements 4 have a laminar shape and are orthogonally arranged with respect to the bearing surface 2a.

It is also possible to use different types of supporting elements in addition to, or in place of, what shown. For example, an alternative embodiment of the present invention may comprise columns arranged between the bearing surface 2a and the base 2d of the casing 2 opposite to the bearing surface 2a, or horizontal bracing beams of the bearing surface 2a.

It is further possible to use supporting elements angularly arranged at less than 90 degrees with respect to the bearing surface 2a.

In the embodiment of the invention that can be seen in figures, the supporting elements 4 are part of the second housing 6 and, in particular, form an inner side surface of the second housing 6. The bearing surface 2a is therefore constrained to the second housing 6.

It is however possible to use supporting elements not constrained to the second housing 6, or anyway outside it.

In use, a gas chromatograph 10 is rested above the gas generator 1, on the horizontally arranged bearing surface 2a (Figure 4).

Typically, the gas generator 1 and the gas chromatograph 10 are then in turn rested above a working surface 11, thereby considerably reducing the horizontal bulk on this working surface compared to traditional solutions available on the market.

The means 3 for producing hydrogen are connected to the gas chromatograph through specific tubing, not shown, in order to supply hydrogen thereto. As mentioned, the means 3 for producing hydrogen typically exploit the water electrolysis and a polymeric membrane (PEM) in order to separate hydrogen from the oxygen contained in the water itself.

Furthermore, the gas generator 1 can preferably supply purified air to the gas chromatograph 10, typically to the FID detector through the afore mentioned means 8 for generating a flow of purified air, together with a respective delivering duct which can be connected to a gas chromatograph 10.

In the latter case, although the means 8 for purifying air are mechanically separated - for example through a partition (figure 3) - from the means 3 for producing hydrogen, the control panel 2c of the generator 1 can be configured so as to be able to separately and accurately control both the means 3 for producing hydrogen and the means 8 for generating a flow of purified air, for example by a CPU.

## Claims

1. Gas generator (1) for a gas chromatograph (10) of the type comprising means (3) for producing hydrogen and an outer casing (2) for enclosing at least said means (3) for producing hydrogen, said outer casing (2) comprising a bearing surface (2a) arranged substantially horizontal in an operative condition and shaped so as to bear said gas chromatograph (10).

2. Generator (1) according to one of the preceding claims, wherein said outer casing (2) comprises at least one supporting element (4) for said bearing surface (2a), said supporting elements (4) being constrained to said bearing surface (2a) and being arranged at least partially inside said casing (2).

3. Generator (1) according to claim 1 or 2, wherein said supporting element (4) extends from said bearing surface (2a) to a second surface (2d) of said casing (2).

4. Generator (1) according to any one of the preceding claims, **characterized in that** at least said bearing surface (2a) or the whole casing (2) is made of steel, preferably of Fe360 Type.

5. Generator (1) according to one of the preceding claims, wherein said outer casing (2) has a height (H) smaller than the other two dimensions of said outer casing (2).

6. Generator (1) according to one of the preceding claims, wherein said outer casing (2) is provided with at least one first (5) and one second (6) housing, said first housing (5) enclosing said means (3) for producing hydrogen and being movable with respect to said bearing surface (2a) and said second housing (6).

7. Generator (1) according to claim 6, wherein said first housing (5) is translatable with respect to said bearing surface along a direction substantially parallel to said bearing surface (2a).

8. Generator (1) according to one of claims 6 to 7, wherein said bearing surface (2a) is constrained to said second housing (6).

9. Generator (1) according to one of claims 6 to 8, wherein said second housing (6) comprises means (7) for supplying water to said means (3) for producing hydrogen.

10. Generator (1) according to any one of the preceding claims, **characterized by** comprising means (8) for generating a flow of purified air.
